# Europäisches Patentamt
## European Patent Office
## Office européen des brevets

(19)

(11) Veröffentlichungsnummer: **0 378 682**

**A1**

(12) # EUROPÄISCHE PATENTANMELDUNG
## veröffentlicht nach Art. 158 Abs. 3
## EPÜ

(21) Anmeldenummer: 88906830.0

(51) Int. Cl.5: **G01T 1/02**

(22) Anmeldetag: 25.05.88

(86) Internationale Anmeldenummer:
**PCT/SU88/00119**

(87) Internationale Veröffentlichungsnummer:
**WO 89/11663 (30.11.89 89/28)**

(43) Veröffentlichungstag der Anmeldung:
**25.07.90 Patentblatt 90/30**

(84) Benannte Vertragsstaaten:
**BE CH DE FR GB IT LI NL SE**

(71) Anmelder: **INSTITUT MEKHANIKI
METALLOPOLIMERNYKH SISTEM AKADEMII
NAUK BELORUSSKOI SSR**
**ul. Kirova, 32a**
**Gomel, 246652(SU)**

Anmelder: **FILIAL
NAUCHNO-ISSLEDOVATELSKOGO
FIZIKO-KHIMICHESKOGO INSTITUTA IMENI
L.Ya.KARPOVA**
**Kaluzhskaya obl.**
**Obninsk, 249020(SU)**

(72) Erfinder: **PLESKACHEVSKY, Jury Mikhailovich**
**ul. Zhdanova, 45-62**
**Gomel, 246001(SU)**
Erfinder: **SELKIN, Vladimir Petrovich**
**ul. Matrosova, 4-85**
**Gomel, 246027(SU)**

Erfinder: **SMIRNOV, Viktor Veniaminovich**
**ul. Ogarenko, 7-21**
**Gomel, 246045(SU)**
Erfinder: **DUBOVA, Elena Borisovna**
**ul. Ogarenko, 27-95**
**Gomel, 246045(SU)**
Erfinder: **GOFSHTEIN, Valery Zakharovich**
**ul. Chapaeva, 28-78 Gomelskaya obl.**
**Mozyr, 247760(SU)**
Erfinder: **GOCHALIEV, Gasan Ziyadovich**
**ul. Zholio-Kjuri, 7-56**
**Kaluzhskaya obl. Obninsk, 249020(SU)**
Erfinder: **RUBIN, Boris Isakovich**
**ul. Zvezdnaya, 1b-38**
**Kaluzhskaya obl. Obninsk, 249020(SU)**
Erfinder: **ADERIKHA, Vladimir Nikolaevich**
**ul. Karpovicha, 10-30**
**Gomel, 246017(SU)**

(74) Vertreter: **Patentanwälte Beetz sen. - Beetz
jun. Timpe - Siegfried - Schmitt-Fumian-
Mayr**
**Steinsdorfstrasse 10**
**D-8000 München 22(DE)**

(54) **DOSIMETRIEVERFAHREN FÜR IONISIERENDE STRAHLEN.**

(57) A method for dosimetering ionizing radiation provides for radiating a sample of polyethylene with a reference ionizing radiation, heating it, deforming and cooling it down in the deformed state. Then the sample of polyethylene is subjected to the radiation to be measured, heated a temperature above the polyethylene melting point, thus enabling its thermal contraction and then the dimensions of the sample are measured, on the basis of which the dose of the ionizing radiation absorbed by the sample is evaluated.

EP 0 378 682 A1

VERFAHREN ZUR DOSISMESSUNG EINER IONISIERENDEN STRAHLUNG

## Gebiet der Technik

Die Erfindung bezieht sich auf Verfahren zur Messung von Kernstrahlungs- und Röntgenstrahlendaten und betrifft insbesondere Verfahren zur Dosismessung einer ionisierenden Strahlung.

## Zugrundeliegender Stand der Technik

Es ist ein Verfahren zur Dosismessung einer ionisierenden Strahlung bekannt, welches darin besteht, dass man die Masse eines mit einer ionisierenden Strahlung bestrahlten Musters aus Polväthylen ermittelt und dieses Muster in einem siedenden Lösungsmittel (Xylol oder Toluol) innerhalb von 24 bis 36 Stunden hält, anschliessend bis zum Erhalten einer konstanten Masse, in der Regel innerhalb von 6 Stunden austrocknet und nochmals die Masse des Musters ermittelt, wonach man nach dem Wert des ungelösten Teils des Mustermaterials, einer Gelfraktion, und nach den Werten der gemessenen Eichkurve die durch das Muster absorbierte Dosis der ionisierenden Strahlung bestimmt (E.E.Finkel u.a. "Hitzebeständige Leitungen und Kabel mit einer strahlungsmodifizierten Isolierung", 1975, "Energie" (Moskau), S. 179 bis 180).

Das genannte Verfahren ist recht arbeitsintensiv, erfordert die Verwendung von toxischen Lösungsmitteln, hat einen eingeschränkten Dosismessungsbereich (20 bis 100 kGr). Infolge einer längeren Behandlungszeit der Muster nach der Bestrahlung (30 bis 42 Stunden) kann in diesem Verfahren eine operative Kernstrahlungskontrolle nicht durchgeführt werden.

Es ist ein Verfahren zur Dosismessung einer ionisierenden Strahlung bekannt, welches darin besteht, dass man die absorbierte Dosis einer ionisierenden Strahlung nach der Änderung der optischen Eigenschaften der mit der ionisierenden Strahlung bestrahlten nichthärtbaren Epoxidharze ermittelt (SU, A, 500704).

Dieses Verfahren zeichnet sich jedoch durch eine unzureichende Genauigkeit infolge einer starken Abhängigkeit der optischen Eigenschaften der nichthärtbaren Epoxidharze von Umwelteinflüssen, der Oxydationsstufe und der unbeständigen Kennwerte der Epoxidharze aus verschiedenen Partien aus. Ausserdem ist dieses Verfahren wenig empfindlich in dem bis zu 500 kGr liegenden Bereich der absorbierten Dosen.

Es ist auch ein Verfahren zur Dosismessung einer ionisierenden Strahlung bekannt, das die Bestrahlung eines Musters aus Polyäthylen mit einer ionisierenden Strahlung, die Erwärmung des Musters auf eine die Schmelztemperatur des Polyäthylens übersteigende Temperatur, eine Verformung des Musters beim Erwärmen und die Messung der Masse des Musters nach der Verformung, nach welchen über die durch das Muster absorbierte Dosis der ionisierenden Strahlung urteilt wird, umfasst. ("Atomkernenergie", Nr. 4, 1959, H.Wilski, "Ein neues Dosismessverfahren für den Megarad-Bereich", S. 402 bis 403).

Dieses Verfahren schliesst folgende konkrete Arbeitsgänge ein:

die Bestrahlung eines Musters aus Polyäthylen mit einer ionisierenden Strahlung (Elektronenstrahlung oder Gamma-Strahlung),

die anschliessende Erwärmung des Musters unter ständiger Krafteinwirkung von 0,2 MPa auf eine die Schmelztemperatur des Polyäthylens (443 K) übersteigende Temperatur, das Halten des Musters bei dieser Temperatur innerhalb von 30 min, die Abkühlung des Musters auf die Raumtemperatur und die Messung der Masse des Musters. Über die absorbierte Dosis wird nach der unter der Einwirkung der Kraft stattfindenden Vergrösserung der senkrecht zu der Kraftangriffsrichtung liegender Oberfläche des Musters urteilt. Die Endfläche des Musters wird durch den Vernetzungsgrad des Polyäthylens bei der Bestrahlung mit einer ionisierenden Strahlung bestimmt.

Das genannte Verfahren zur Dosismessung einer ionisierenden Strahlung ist einfach, erfordert für seine Durchführung keine toxischen Lösungsmittel, ist gegenüber Dosen von über 5 kGr empfindlich; des Verfahren gestattet es, die Grösse der absorbierten Dosis recht operativ zu ermitteln und die Dosismessung bei der Bestrahlung der Muster mit Elektronen- und Gamma-Strahlung vorzunehmen.

Dem genannten Verfahren ist jedoch eine unzureichende Genauigkeit bei der Messung der absorbierten Dosis einer ionisierenden Strahlung (Fehler bei der Wiedergabe von

Ergebnissen betragen +_ IO bis I5%) eigen, wegen grosser Messfehler bei der Emittlung der Oberfläche des verformten Musters, der Abhängigkeit der Endfläche des Musters und der Temperatur des Musters sowohl während der Belastung des Musters als auch während der Messung seiner Oberfläche voneinander sowie einer grossen Abhängigkeit des Vernetzungsgrades des Polyäthylens und der Qualität der zu verwendenden Polyäthylenpartie voneinander. Das Verfahren hat einen eingeschränkten Dosismessungsbereich (5 bis 500 kGr) sowie einen begrenzten Temperaturbereich bei der Messung der absorbierten Dosis (nicht mehr als 370 K infolge des Schmelzens des Musters) auf.

Offenbarung der Erfindung

Der vorliegenden Erfindung liegt die Aufgabe zugrunde, ein Verfahren zur Dosismessung einer ionisierenden Strahlung zu entwickeln, nach dem ein Muster aus Polyäthylen einer solchen Behandlung zusätzlich ausgesetzt wird, die diesem Muster neue physikalische, von der absorbierten Dosis einer ionisierenden Strahlung abhängige Eigenschaften verleiht, die es gestatten, diese Dosis mit einer höheren Genauigkeit in einem breiteren Bereich der absorbierten Mussdosis und in einem breiteren Temperaturbereich bei der Messung der absorbierten Dosis zu ermitteln.

Das wird dadurch erreicht, dass bei einem Verfahren zur Dosismessung einer ionisierenden Strahlung, welches darin besteht, dass ein Muster aus Polyäthylen mit einer ionisierenden Strahlung bestrahlt, dann auf eine die Schmelztemperatur des Polyäthylens übersteigende Temperatur erwärmt, während der Erwärmung verformt wird und dann die Masse des Musters nach der Verformung gemessen werden, nach denen über die durch das Muster absorbierte Dosis der ionisierenden Strahlung urteilt wird, erfindungsgemäss, das Muster aus Polyäthylen vor der genannten Bestrahlung mit der ionisierenden Strahlung mit einer genormten ionisierenden Strahlung bestrahlt wird, wonach es erwähmt, verformt und anschliessend unter Erhaltung des verformten Zustandes abgekühlt wird.

Es ist wünschenswert, dass das Muster aus Polyäthylen mit einer genormten ionisierenden Strahlung mit einer Dosis von 50 bis 1000 kGr bestrahlt, anschliessend auf 383 bis 573 K erwärmt und um 5 bis 800% der Ausgangsmasse des Musters verformt wird.

Es ist zweckmässig, dass das Muster aus Polyäthylen nach der Abkühlung unter Erhaltung des verformten Zustandes eingespannt wird, indem der Grad dieses verformten Zustandes des Musters festgelegt wird, und nach der Bestrahlung mit einer ionisierenden Strahlung das Muster abgespannt wird.

Nach der Bestrahlung des Musters aus Polyäthylen mit einer genormten ionisierenden Strahlung kann in das Muster ein Sensibilisator der Strahlungsvernetzung des Polyäthylens eingeführt werden.

Es ist wünschenswert, dass der Sensibilisator der Strahlungsvernetzung des Polyäthylens in das Muster aus Polyäthylen in einer Menge von 0,2 bis 15 Masse% eingeführt wird.

Eine solche Durchführung des erfindungsgemässen Verfahrens zur Dosismessung einer ionisierenden Strahlung gestattet es, die Genauigkeit bei der Ermittlung der absorbierten Dosis einer ionisierenden Strahlung zu erhöhen, den Mess- sowie Temperaturbereich bei der Messung der absorbierten Dosis zu erweitern.

Die besten Durchführungsvarianten der Erfindung

Nachstehend wird die Erfindung anhand konkreter Durchführungsvarianten näher erläutert.

Das erfindungsgemässe Verfahren zur Dosismessung einer ionisierenden Strahlung besteht darin, dass ein Muster aus Polyäthylen mit einer genormten ionisierenden Strahlung, z.B. mit einer Elektronen- oder einer Gamma-Strahlung bestrahlt wird. Danach wird das Muster aus Polyäthylen erwärmt, verformt und unter Erhaltung des verformten Zustandes abgekühlt.

Der Kürze halber werden die oben erwähnten Bestrahlung, Erwärmung und Verformung im weiteren als die erste Bestrahlung, die erste Erwähmung und die erste Verformung bezeichnet.

Anschliessend wird das Muster aus Polyäthylen nochmals mit der gleichartigen ionisierenden (zu messenden) Strahlung bestrahlt und auf eine über die Schmelztemperatur des Polyäthylens liegende Temperatur ohne Anlegen einer äußeren Kraft erwärmt, wobei während der Erwärmung eine Verformung desMusters infolge seiner Schrumpfung durch die Wärmeeinwirkung stattfindet.

Danach werden die Masse des Musters nach der erfolgten Schrumpfung gemessen, nach denen über die durch das Muster absorbierte Dosis einer ionisierenden Strahlung urteilt wird.

Diese Bestrahlung, Erwärmung und Verformung werden, wie oben erwähnt, im weiteren als die zweite Bestrahlung, die zweite Erwärmung und die zweite Verformung bezeichnet.

Das physikalische Wesen des erfindungsgemässen Verfahrens besteht in folgendem.

Das durch die erste Bestrahlung vorvernetzte, durch die erste Verformung im hochelastischen Zustand bei der ersten Erwärmung verformte und im verformten Zustand abgekühlte Muster aus Polyäthylen weist ein primäres orientiertes dreidimensionales Molekularnetzwerk auf, durch das bei diesem Muster ein Effekt"Form-Speicher"entsteht. Bei der zweiten Bestrahlung eines solchen Musters mit einer ionisierenden Messtrahlung bildet sich infolge einer Fortsetzung der Vernetzungsprozesse im Muster ein sekundäres nicht orientiertes Molekularnetz. Bei der anschliessenden zweiten Erwärmung des Musters auf eine die Schmelztemperatur des Polyäthylens übersteigende Temperatur tritt das Effekt"Form-Speicher"des primären Netzwerkes zutage, und es findet eine Schrumpfung des Musters durch die Wärmeeinwirkung statt, d.h. die zweite Verformung des Musters wird durchgeführt.

Der Wiederherstellungsgrad der Ursprungsmasse des Musters ist von der Dichte der sich bei der zweiten Bestrahlung bildenden nichtgespannten Querbindungen des sekundären Netzwerkes abhängig, welche eine Schrumpfung des Musters durch die Wärmeeinwirkung verhindern. Durch das Verhältnis der elastischen Eigenschaften zueinander welche von der Dichte der Querbindungen des primären und des sekundären Netzwerkes abhängig sind, werden gerade die Endmasse des Musters bestimmt , nach denen über die absorbierte Dosis der zweiten Bestrahlung urteilt wird. Dabei liegen bei der minimalen Messgrösse der absorbierten Dosis der ionisierenden Strahlung der zweiten Bestrahlung die Endmasse des Musters seinen Ausgangsmassen vor der ersten Verformung nahe, und bei der maximalen Messgrösse der absorbierten Strahlungsdosis tritt keine Schrumpfung des Musters durch die Wärmeeinwirkung ein.

Nach dem erfindungsgemässen Verfahren wird das Muster aus Polyäthylen zuerst mit einer genormten ionisierenden Strahlung mit einer Dosis von 50 bis I000kGr bestrahlt, anschliessend auf 393 bis 573 K erwärmt und um 5 b s 800% der Ursprungsmassen des Musters (Dehnung, Kontraktion, Biegung) verformt.

Dann wird das Muster aus Polyäthylen, wie oben beschrieben, nochmals mit einer Dosis von 0,25 bis 7000kGr bestrahlt und auf 443±I0 K erwärmt.

Es muss erwähnt werden, dass die minimale erforderliche Dosis der ersten Bestrahlung die vollständige Offenbarung des Effektes "Form-Speicher" des bestrahlten Polyäthylens während seiner Schrumpfung durch die Wärmeeinwirkung gewährleisten muss, falls das Muster der zweiten Bestrahlung mit einer ionisierenden Strahlung nicht ausgesetzt worden ist, d.h., wenn die Grösse der absorbierten Strahlungsdosid der zweiten Bestrahlung gleich Null ist. Experimentell wurde es nachgewiesen, dass diese Dosis nicht unter 50 kGr liegen soll. Indem man die Dosis der ersten Bestrahlung vergrössert, kann man den Messbereich für die Messung der absorbierten Dosis der zweiten Bestrahlung auf höhere Dosen ausdehnen. Es ist jedoch unzweckmässig, die erste Bestrahlung des Musters mit Dosen von über I000kGr vorzunehmen, weil Polyäthylen sein Vermögen einbüsst, im Verlauf der ersten Verformung bedeutend verformt zu werden, was zu einer Zunahme des Messfehlers führt.

Die Wahl der Temperatur für die erste Erwärmung ist durch folgende Ursachen bedingt. Die Erwärmung des Polyäthylens auf 383 K und eine höhere Temperatur gestattet es, die einschränkende Wirkung der Kristallgebiete zu beseitigen, und das bestrahlte Polyäthylen erwirbt die Fähigkeit zu einer hochelastischen Verformung ohne Zerstören der Ganzheit. Die Erwärmung auf eine Temperatur von über 573 K ist unzweckmässig, weil dabei ein intensiver thermischer Abbau des Polyäthylens eingeleitet wird, der zu einer Vergrösserung der Streubreite der bei der Dosismessung gewonnenen Messwerte nach einzelnen Mustern führt.

Die Wahl des Grades der ersten Verformung 100% ($\frac{l-l_a}{l_o}$), worin $l_o$ - Ausgangmasse des Musters vor dessen Verformung; $l$ - Masse des Musters nach der Verformung bedeuten, ist durch die Notwendigkeit bedingt, eine genaue Messung der absorbierten Dosis zu gewährleisten. So sind bei einem geringen Verformungsgrad (von unter 5%) die Eigenspannungen im Muster nicht gross und sogar ein geringer absoluter Unterschied zwischen den Werten derselben führt zu einer wesentlichen Streubreite der Messwerte der Dosismessung. Bei maximalen Grössen des Verformungsgrades (von über 800%) nimmt die Streubreite der Messwerte infolge einer Aufspaltung der überspannten Bindungen des primären Molekularnetzes zu.

Wenn das Muster der zweiten Bestrahlung mit der zu messenden Strahlung von einer sehr hohen Leistung, ausgesetzt wird, die zu einer Selbsterwärmung des Musters auf eine die Schmelztemperatur der kristallinen Phase des Polyäthylens übersteigende Temperatur führt, oder, wenn die Umgebungstemperatur im Verlauf der zweiten Bestrahlung die Schmelztemperatur des Polyäthylens übersteigt, muss, ein frühzeitiges Auslösen des Effektes "Form-Speicher" des Musters verhindert werden. Zu diesem Zweck werden nach dem erfindungsgemässen Verfahren nach der Abkühlung des Musters aus Polyäthylen unter Erhaltung des bei der ersten Verformung gewonnenen Verformungszustandes, die gegenüberliegenden Ränder des ohne Durchhängen gespannten Musters in relativ zueinander feststehend angeordneten Spannvorrichtungen aufgespannt, indem der Grad der ersten Verformung des Musters festgelegt wird; nach der zweiten Bestrahlung mit einer ionisierenden Strahlung wird das Muster abgespannt und anschliessend der zweiten Erwärmung ausgesetzt.

Zur Erhöhung der Genaukgeit der Messungen nach dem erfindungsgemässen Verfahren im Bereich der geringen Messdosen (von unter IC kGr) wird in das Muster aus Polyäthylen zweckmässigerweise nach der ersten Bestrahlung desselben ein Sensibilisator des Strahlungsvernetzung des Polyäthylens eingeführt. Bei der zweiten Bestrahlung des Musters in Gegenwart des Sensibilisators wird das sekundäre nicht iorientierte Netz dds Musters intensiver vernetzt, d.h., bei den gleichen Dosen der zweiten Bestrahlung wird die Dichte der Querbindungen des Sekundärnetzes in einem Muster mit Sensibilisator höher als in einem Muster ohne Sensibilisator sein. Gleichzeitig übt der Sensibilisator keinen Einfluss auf die Dichte der Querbindungen des primären Netzes und dessen elastische Eigenschaften aus. Somit kann durch die Einführung des Sensibilisators der Strahlungsvernetzung in das Muster nach der ersten Bestrahlung desselben mit einer ionisierenden Strahlung der Messbereich bei der Messung der absorbieren Dosis der zweiten Bestrahlung auf kleinere Dosen ausgedehnt und die Messgenauigkeit bei der Messung der absorbieren Dosis in geringen Dosen erhöht werden.

Der Sensibilisator der Strahlungsvernetzung des Polyäthylens wird in einer Menge von 0,2 bis I5 Masse% in das Muster aus Polyäthylen eingeführt.

Als Sensibilisator können Orthodichlorbenzol und Triallylzyanurat verwendet werden.

Die Notwendigkeit der Einführung des Sensibilisators in das Muster aus Polyäthylen in einer optimalen Menge ist dadurch bedingt, dass in das geformte Muster aus Polyäthylen eine grössere Sensibilisatormenge nicht eingeführt werden kann. So beträgt bei einer Gleichgewichtsquellung des Polyäthylens in Orthodichlorbenzol die maximale einzuführende Menge des zuletzt genannten I5 Masse%, während die maximale Menge von polyfunktionellen Monomeren, die in ein aus der Lösung gesponnenes Muster eingeführt wird, nicht mehr als einige Masseprozente beträgt. Es wurde experimentell nachgewiesen, dass die minimale Menge des Sensibilisators, die einen positiven Effekt im Vergleich zu den Mustern ohne Sensibilisator gewährleistet, nicht weniger als 0,2 Masse% betragen muss.

Nachstehend werden konkrete Durchführungsbeispiele der Erfindung angeführt.

Beispiel I

Muster werden im Spritzgussverfahren aus Polyäthylen niedriger Dichte (Dichte 0,9I85±0,00I5 g/cm$^3$, Fliessfähigkeitskennwerte der Schmelze 2,0±0,2 g/I0 min, Schmelztem-

peratur 376 bis 383 K) hergestellt. Die Masse der Muster betragen: Länge 50 mm, Breite IO mm, Dicke 4 mm.

Die erste und die zweite Bestrahlung der Muster werden an der Luft auf einer strahlenchemischen Anlage mit einer Gamma-Strahlung von Isotop $^{60}$Co bei einer Leistung der absorbierten Dosis von I,5 Gr/s durchgeführt. Die absorbierte Dosis wird mittels eines dosimetrischen Ferrosulfatsystems parallel überwacht.

Die erste Bestrahlung wird mit einer absorbierten Dosis von 50 kGr durchgeführt. Dann werden die erste Erwärmung auf 383 K und die erste Verformung der Muster im Dehnungsverfahren bis zu einem Verformungsgrad von IOO% vorgenommen. Anschliessend werden die Muster im Verformungszustand (ohne Entlastung) auf 293 K abgekühlt. Dann werden die Muster in die Zone der zu messenden ionisierenden Strahlung eingetragen und in einem Dosisintervall von 0,25 bis 7000 kGr bestrahlt. Danach werden die Muster aus der Zone der ionisierenden Strahlung entfernt und ohne Anlegen einer äusseren Kraft der zweiten Erwärmung innerhalb von 5 min bei einer Temperatur von 4I3±IO K ausgesetzt, wobei im Verlauf dieser Erwärmung eine Schrumpfung der Muster durch die Wärmeeinwirkung stattfindet. Nach den Endlängenmassen der Muster wird die Eichabhängigkeit der relativen Länge $L/L_o$ derselben (worin L - Musterlänge nach der Schrumpfung durch die Wärmeeinwirkung; $L_o$ - Musterlänge nach der ersten Verformung bedeuten) und der absorbierten Dosis der ionisierenden Strahlung bei der zweiten Bestrahlung voneinander erstellt. Nach der Eichabhängigkeit wird die Grösse der absorbierten Dosis der zu messenden ionisierenden Strahlung für jedes zu prüfende Muster ermittelt .

Die Genauigkeit der Messung nach den erfindungsgemässen Verfahren wird durch den relativen Fehler der Wiedergabe von Messergebnissen in einer Messreihe aus IO Messungen gekennzeichnet, der nach der Student-Verteilung bei einem Zuverlässigkeitswert von 0,99 ermittelt wird. Als minimale Dosis der ionisierenden (zu messenden) Strahlung wird eine absorbierte Strahlungsdosis angenommen, bei der sich die Kennwerte sämtlicher Muster in der Reihe von dem Kennwerten der zweiten Bestrahlung nicht ausgesetzten Muster unter-

scheiden. Als maximale Dosis der ionisierenden (zu messenden) Strahlung wird eine absorbierte Strahlungsdosis angenommen, bei der für sämtliche Muster der Reihe die Schrumpfung durch die Wärmeeinwirkung nach der zweiten Bestrahlung noch festgelegt werden kann.

Die Verfahrensweisen nach Beispiel I und nachfolgenden Beispielen werden in der Tabelle I angeführt. Die Kenndaten des Verfahrens gemäss Beispiel I und gemäss weiteren Beispielen sind in der Tabelle 2 angeführt.

Tabelle I

| Lfd. Nr. | Bezeichnung von Verfahrensweise, Arbeitsgang, Stoff oder Parameter | Beispiele Nr. I | Nr. 2 | Nr. 3 |
|---|---|---|---|---|
| I | 2 | 3 | 4 | 5 |
| I. | Mustermaterial: | | | |
| | Polyäthylen niedriger Dichte | + | + | - |
| | Polyäthylen hoher Dichte | - | - | + |
| 2 | absorbierte Dosis der ersten Bestrahlung, kGr | 50 | 200 | IOO |
| 3. | Temperatur der ersten Erwärmung, K | 383 | 443 | 443 |
| 4. | Grad der ersten Verformung,% | IOO | IOO | ·800 |
| 5. | Temperatur der zweiten Erwärmung, K | 443 | 443 | 443 |
| 6. | Sensibilisatorgehalt der Strahlungsvernetzung, Masse% | - | .- | - |

Fortsetzung der Tabelle I

| Lfd. Nr. | Beispiele 4 | 5 | 6 | 7 | 8 | 9 |
|---|---|---|---|---|---|---|
| I | 6 | 7 | 8 | 9 | 10 | 11 |
| I. | - | - | - | + | + | + |
| | + | + | + | - | - | - |
| 2. | IOOO | 200 | 200 | 200 | 53 | 53 |
| 3. | 573 | 443 | 443 | 443 | 443 | 443 |
| 4. | 5 | IOO | IOO | IOO | IOO | IOO |
| 5. | 443 | 443 | 443 | 443 | 443 | 443 |
| 6. | - | - | - | I5 | 3 | 0,2 |

+ Anwesenheit des Materials

- Abwesenheit des Materials oder des Arbeitsganges

Tabelle 2

| Lfd. Nr. | Kennwerte | Beispiele | | |
|---|---|---|---|---|
| | | I | 2 | 3 |
| I | 2 | 3 | 4 | 5 |
| I. Fehler in % bei der Ermittlung der absorbierten Dosis der zweiten Bestrahlung bei deren Grösse von (kGr): | | | | |
| | 5 | ±IO | ±IO | ±IO |
| | 500 | ±5 | ±5 | ±7,5 |
| 2. Maximale Messdosis der zweiten Bestrahlung, kGr | | 2000 | 3000 | 2000 |
| 3. Minimale Messdosis der zweiten Bestrahlung, kGr | | I | 2,5 | I |
| 4. Maximal zulässige Temperatur des Mediums bei der zweiten Bestrahlung | | 363 | 363 | 363 |

Fortsetzung der Tabelle 2

| Lfd. Nr. | Beispiele | | | | | |
|---|---|---|---|---|---|---|
| | 4 | 5 | 6 | 7 | 8 | 9 |
| I | 6 | 7 | 8 | 9 | IO | II |
| I. | ±IO | ±5 | ±5 | ±5 | ±3 | ±7,5 |
| | ±5 | ±4 | ±4 | ±5 | ±5 | ±5 |
| 2. | 6000 | 3000 | 3000 | 2000 | 2000 | 2000 |
| 3. | 5 | I | I | I | 0,25 | I |
| 4. | 373 | 373 | 473 | 363 | 363 | 363 |

Beispiel 2

Die Methoden und Verfahrensweisen sind dieselben wie im Beispiel I. Der Unterschied besteht darin, dass die erste und die zweite Bestrahlungen auf einem Elektronenbeschleuniger mit einer Elektronstrahlung vorgenommen werden, die eine Elektronenenergie von 0,7 MeV und eine Leistung der absorbierten Dosis von etwa $IO^3$ Gr/s hat. Die Temperatur der ersten Erwärmung beträgt 443, die absorbierte Dosis der ersten Bestrahlung - 200 kGr; die Muster werden nach einem Extrusionsverfahren gewonnen, wobei deren Ausgangsmasse betragen: Länge IOO mm, Breite

7 mm, Dicke 0,3 mm.

Beispiel 3

Die Methoden und Verfahrensweisen sind diselben wie im Beispiel 2. Der Untersdhied besteht darin, dass Muster geprüft werden, welche aus einer Zusammensetzung auf der Basis von Polyäthylen hoher Dichte (die Dichte beträgt 0,949 bis 0,955 g/cm$^3$, mittlerer Fliessfähigkeitswert - 7,5 g/IO min, Schmelztemperatur - 398 bis 405 K) bestehen, die einen nicht stabilisierten Korrosionsschutzzusatz enthält. Ausserdem beträgt die absorbierte Dosis der ersten Bestrahlung IOO kGr bei einem Grad der ersten Verformung von 800%.

Beispiel 4

Die Methoden und Verfahrensweisen sind dieselben wie im Beispiel 3. Der Unterschied besteht darin, dass die absorbierte Dosis der ersten Bestrahlung IOOO kGr, der Grad der ersten Verformung 5%, die Temperatur der ersten Erwärmung 573 K betragen.

Beispiel 5

Die Methoden und Verfahrensweisen sind dieselben wie im Beispiel I. Der Unterschied besteht darin, dass das Mustermaterial aus dem Beispiel 3 eingesetzt wird, die absorbierte Dosis der ersten Bestrahlung 200 kGr und die Temperatur der ersten Erwärmung 443 K betragen.

Beispiel 6

Die Methoden und Verfahrensweisen sind dieselben wie im Beispiel 5. Der Unterschied besteht darin, dass bei der zweiten Bestrahlung in die Zone der Bestrahlung ein Heizelement mit einem Thermoelement eingeführt wird, wobei die Temperatur der Mediums in einem Bereich von 423 bis 473 K aufrechterhalten wird. Ausserdem werden die Muster mit der zweiten Bestrahlung bestrahlt, wobei deren gegenüberliegende senkrecht zu der Richtung der ersten Verformung der Muster verlaufende Ränder an einer in Form eines mit Spannvorrichtungen versehenen Rahmens ausgeführten Metallfassung befestigt werden. Nach der zweiten Bestrahlung werden die Ränder aus den Spannvorrichtungen gelöst und der zweiten Erwärmung ausgesetzt.

Beispiel 7

Die Methoden und Verfahrenweisen sind dieselben wie im Beispiel 2. Der Unterschied besteht darin, dass die Muster nach der ersten Verformung in einen Sensibilisator der Strahlungsvernetzung von Polyäthylen (Orthodichlorbenzol) eingesetzt und in diesem bei einer Temperatur von 293 K innerhalb von 2 Stunden, d.h. bis zum Erreichen des Gleichgewichtsgrades der Quellung (etwa I5 Masse%) gehalten werden. Der Gehalt der Muster an Sensibilisator wird gravimetrisch ermittelt. Dann werden die Muster der zweiten Bestrahlung unmittelbar in Orthodichlorbenzol ausgesetzt. Für die zweite Bestrahlung verwendet man eine Gamma-Strahlung von Isotop $^{60}$Co mit einer Leistung der absorbierten Dosis von I,5 Gr/s. Danach werden die Muster aus Orthodichlorbenzol ausgehoben, der zweiten Erwärmung ausgesetzt, wonach weiter wie im Beispiel 2 verfahren wird.

Beispiel 8

Die Methoden und Verfahrensweisen sind dieselben, wie im Beispiel 2, mit dem Unterschied, dass die absorbierte Dosis der ersten Bestrahlung 53 kGr beträgt. Ein weiterer Unterschied besteht darin, dass nach der ersten Verformung in Muster ein Sensibilisator der Vernetzung von Polyäthylen in einer Menge von 3 Masse% (Triallylzyanurat) eingeführt wird. Der Sensibilisator wird in der Weise eingeführt, dass die Muster in eine Lösung von Triallylzyanurat in Toluol eingesetzt und bis zum Erreichen des Gleichgewichtsgrades der Quellung (2 Stunden) gehalten werden. Die Konzentration der Lösung beträgt 40 Masse% Triallylzyanurat, die Temperatur der Lösung - 333 K. Danach werden die Muster aus der Lösung ausgehoben und bis zur Gewinnung einer konstanten Masse ausgetrocknet. Dann werden die Muster der zweiten Bestrahlung mit einer Gamma-Strahlung von Isotop $^{60}$Co im Vakuum (IO$^-$ Pa) ausgesetzt, wonach weiter wie im Beispiel 2 verfahren wird.

Beispiel 9

Die Methoden und Verfahrensweisen sind dieselben wie im Beispiel 8, mit dem Unterschied, dass die Menge des in Muster einzuführenden Sensibilisators 0,2 Masse%, die Konzentration der Lösung - 5 Masse% Triallylzyanurat, die Temperatur der Lösung 293 K betragen.

Das erfindungsgemässe Verfahren zur Dosismessung der ionisierenden Strahlung gewährleistet eine hohe Messgenauigkeit bei der Messung der absorbierten Dosis der ionisierenden Strahlung (der Fehler bei der Wiedergabe der Kennwerte der Muster beträgt $\pm 5\%$ bei einer statistischen Sicherheit von 0,99) dadurch, dass dabei die absorbierte Dosis der ionisierenden Strahlung aus dem Vergleich des Einwirkungsgrades bei der Einwirkung der absorbierten Dosis einer bekannten Grösse auf das Polyäthylen des Musters der ersten Bestrahlung und des Einwirkungsgrades der zweiten Bestrahlung miteinander, ermittelt wird, d.h., die Ermittlung der absorbierten Dosis der comissierenden Strahlung erfolgt tatsächlich nach dem Verhältnis des Vernetzungsgrades des Polyäthylens bei der ersten Bestrahlung und des Vernetzungsgrades des Polyäthylens bei der zweiten Bestrahlung zueinander.

Das erfindungsgemässe Verfahren gestattet es, industriemässige Polyäthylensorten zu verwenden, wobei es nicht mehr notwendig ist, jede Polyäthylenpartie zu sortieren, weil die im Polyäthylen enthaltenen Nebenbestandteile in ähnlicher Weise die Intensität der Polyäthylenvernetzung sowohl bei der ersten, als auch bei der zweiten Bestrahlung beeinflussen werden.

Ausserdem kann das erfindungsgemässe Verfahren in einem breiten Messbereich bei der Messung der absorbierten Dosis einer ionisierenden Strahlung (0,5 bis 6000 kGr) verwendet werden und gewährleistet die Möglichkeit einer Messung der absorbierten Dosis der ionisierenden Strahlung bei einer erhöhten Temperatur (370 bis 470 K).

Das erfindungsgemässe Verfahren gestattet es, die Muster nach der ersten Bestrahlung und der ersten Verformung eine längere Zeit (mindestens ein Jahr) zu lagern und dann diese unmittelbar auf dem erforderlichen Objekt zur Messung der absorbierten Dosis der zweiten Bestrahlung zu verwenden, weil die Lagerungszeit des Polyäthylens mit dem "Form-Speicher" praktisch keinen Einfluss auf Offenbarungsgrad des Effektes hat.

Für die Durchführung des erfindungsgemässen Verfahrens ist es nicht mehr notwendig, komplizierte Ausrüstungen zu verwenden und hochqualifizierte Fachkräfte unmittelbar am Messobjekt für die Messung der absorbierten Dosis der ionisierenden Strahlung einzusetzen, weil die Erwärmung der Muster auf eine die Schmelztemperatur des Polyäthylens übersteigende Temperatur mittels eines praktisch beliebigen Heizgerätes oder eines Brenners vorgenommen werden kann, während die Längenmasse der Muster mittels eines Messchiebers oder eines Prüflineals gemessen werden können.

Industrielle Anwendbarkeit

Im erfindungsgemässen Verfahren zur Dosismessung einer ionisierenden Strahlung werden Polyäthylen-Detektoren der ionisierenden Strahlung hergestellt, die zur Messung der absorbierten Dosis einer ionisierenden Strahlung, hauptsächlich einer Elektronen- und Gamma-Strahlung, bei der Durchführung verschiedenartiger strahlenchemischer Produktionsprozesse in einem breiten Messbereich der absorbierten Dosen und einem breiten Temperaturbereich bei der Messung der absorbierten Dosen dienen.

Die Polyäthylendetektoren werden nach dem erfindungsgemässen Verfahren in Form von Folien mit einer Dicke von 100 bis 200 $\mu$m oder als Blöcke hergestellt. Diese Detektoren zeichnen sich durch eine recht einfache Ausführungsform aus, sind bequem im Betrieb und lagerungsfähig, erfordern für deren Verwendung keine technologischen Spezialanlagen und Ausrüstungen und können für die Uberwachung der Bestrahlung von Objekten verschiedener Art angefangen von Kabeln und Leitungen und bis komplizierten Formteilen eingesetzt werden. Die Detektoren sind unempfindlich gegen die Leistung der absorbierten Dosis in einem Intervall von 1 bis $10^7$ Gr/s, die Strahlungsenergie in einem Bereich von 0,3 bis 10 MeV und die Feuchtigkeit und wenig empfindlich gegen eine Temperatur von unter 360 K.

Das erfindungsgemässe Verfahren gestattet es, dosimetrische Kenndaten der Polyäthylendetektoren unter Anpassung an Parameter und Besonderheiten der zu messenden Bestrahlung in einem breiten Bereich zu regeln.

Bei einer optimalen Wahl der Polyäthylensorte und der Verfahrensweisen gestattet es das erfindungsgemässe Verfahren, die absorbierte Dosis in einem Bereich von 5 bis 5000 kGr mit einem Fehler der Wiedergabe von ±2 bis 3% bei einer statistischen Sicherheit von 0,95 zu messen. Der zulässige Temperaturbereich beträgt in der Bestrahlungszone 200 bis 473 K.

PATENTANSPRUCHE:

I. Verfahren zur Dosismessung einer ionisierenden Strahlung, welches darin besteht, dass ein Muster aus Polyäthylen mit einer ionisierenden Strahlung bestrahlt, dann auf eine die Schmelztemperatur des Polyäthylens übersteigende Temperatur erwärmt, während der Erwärmung verformt wird und dann die Masse des Musters nach der Verformung gemessen werden, nach denen über die durch das Muster absorbiete Dosis der ionisierenden Strahlung urteilt wird, dadurch g e k e n n z e i c h n e t, dass das Muster aus Polyäthylen vor der genannten Bestrahlung mit der ionisierenden Strahlung mit einer genormten ionisierenden Strahlung bestrahlt wird, wonach es erwärmt, verformt und anschliessend unter Erhaltung des verformten Zustandes abgekühlt wird.

2. Verfahren nach Anspruch I, dadurch g e k e n n z e i c h n e t, dass das Muster aus Polyäthylen mit einer genormten ionisierenden Strahlungs- mit einer Dosis von 50 bis I000 kGr bestrahlt, anschliessend auf 383 bis 573 K erwärmt und um 5 bis 800% der Ausgangsmasse des Musters verformt wird.

3. Verfahren nach Anspruch I oder 2, dadurch g e - k e n n z e i c h n e t, dass das Muster aus Polyäthylen nach der Abkühlung unter Erhaltung des verformten Zustandes eingespannt wird, indem der Grad dieses verformten Zustandes des Musters festgelegt wird, und nach der Bestrahlung mit einer ionisierenden Strahlung das Muster abgespannt wird.

4. Verfahren nach Anspruch I, dadurch g e k e n n z e i c h n e t, dass nach der Bestrahlung des Musters aus Polyäthylen mit einer genormten ionisierenden Strahlung in das Muster ein Sensibilisator der Strahlungsvernetzung des Polyäthylens eingeführt wird.

5. Verfahren nach Anspruch 2, dadurch g e k e n n z e i c h n e t, dass nach der Bestrahlung des Musters aus Polyäthylen mit einer genormten ionisierenden Strahlung in das Muster ein Sensibilisator der Strahlungsvernetzung des Polyäthylens eingeführt wird.

6. Verfahren nach Anspruch 3, dadurch g e k e n n z e i c h n e t, dass nach der Bestrahlung des Musters aus

- 17 -

Polyäthylen mit einer genormten ionisierenden Strahlung in das Muster ein Sensibilisator der Strahlungsvernetzung des Polyäthylens eingeführt wird.

7. Verfahren nach Anspruch 4, dadurch g e k e n n - z e i c h n e t, dass der Sensibilisator der Strahlungsvernetzung des Polyäthylens in das Muster aus Polyäthylen in einer Menge von 0,2 bis 15 Masse% eingeführt wird.

8. Verfahren nach Anspruch 5, dadurch g e k e n n - z e i c h n e t, dass der Sensibilisator der Strahlungsvernetzung des Polyäthylens in das Muster aus Polyäthylen in einer Menge von 0,2 bis 15 Masse% eingeführt wird.

9. Verfahren nach Anspruch 6, dadurch g e k e n n - z e i c h n e t, dass der Sensibilisator der Strahlungsvernetzung des Polyäthylens in das Muster aus Polyäthylen in einer Menge von 0,2 bis 15 Masse% eingeführt wird.

# INTERNATIONAL SEARCH REPORT

International Application No PCT/SU 88/00119

## I. CLASSIFICATION OF SUBJECT MATTER (If several classification symbols apply, indicate all)

According to International Patent Classification (IPC) or to both National Classification and IPC

IPC$^4$: G 01 T 1/02

## II. FIELDS SEARCHED

### Minimum Documentation Searched

| Classification System | Classification Symbols |
|---|---|
| IPC$^4$: | G 01 T 1/02, 1/203 |

Documentation Searched other than Minimum Documentation
to the Extent that such Documents are included in the Fields Searched

## III. DOCUMENTS CONSIDERED TO BE RELEVANT

| Category * | Citation of Document, with indication, where appropriate, of the relevant passages | Relevant to Claim No. |
|---|---|---|
| A | US, A, 4613758, (ATOMIC Energy of Canada Limited), 23 September 1986, see column 4, lines 1-68, columns 5,6 | |
| | & EP, A1, 144120, 12 June 1985 JP, A2, 60-66175, 16 April 1985 CA, A1, 1212487, 7 October 1986 | 1 |
| A | FR, A1, 2568379 (VAB FILMFABRIK WOLFEN), 31 January 1986, see page 3, lines 31-37, pages 4,5,6 | 1-9 |
| | & DD, B1, 226394, 6 May 1987 GB, A1, 2165130, 3 April 1986 DE, A1, 3523873, 30 January 1986 | |
| A | SU, A1, 1026550, (Nauchno-issledovatelsky institut yadernoi fiziki pri Tomskom politekhnicheskom institute im. S.M. Kirova), 30 April 1986, see column 2, lines 21-58, columns 3,4, column 5, lines 1-18 | 1 |
| A | SU, A1, 500704, (Institut fizicheskoi khimii im. L.V. Pisarzhevskogo), 18 June 1980, see column 2,3, column 4, lines 1-45 | 1 |

* Special categories of cited documents:

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance: the claimed invention cannot be considered novel or cannot be considered to involve an inventive step

"Y" document of particular relevance: the claimed invention cannot be considered to involve an inventive step when the document is combined with one or more other such documents, such combination being obvious to a person skilled in the art.

"&" document member of the same patent family

## IV. CERTIFICATION

| Date of the Actual Completion of the International Search | Date of Mailing of this International Search Report |
|---|---|
| 13 December 1988 (13.12.88) | 24 February 1989 (24.02.89) |
| International Searching Authority | Signature of Authorized Officer |
| ISA/SU | |

Form PCT/ISA/210 (second sheet) (January 1985)